(19) **Europäisches Patentamt**

**European Patent Office**

**Office européen des brevets**

(11) **EP 1 054 240 A1**

(12) **EUROPÄISCHE PATENTANMELDUNG**

(43) Veröffentlichungstag:
**22.11.2000 Patentblatt 2000/47**

(51) Int. Cl.7: **G01F 1/84**

(21) Anmeldenummer: **00109671.8**

(22) Anmeldetag: **06.05.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.05.1999 EP 99109896**

(71) Anmelder:
**Endress + Hauser Flowtec AG
CH-4153 Reinach BL 1 (CH)**

(72) Erfinder:
- **Häberli, Roman, Dr.
  4566 Halten (SO) (CH)**
- **Eckert, Gerhard
  79618 Rheinfelden (Baden) (DE)**

(74) Vertreter:
**Morstadt, Volker Dipl.-Ing.
Endress + Hauser(Deutschland)
Holding GmbH
PatServe-Patentabteilung,
Colmarer Strasse 6
79576 Weil am Rhein (DE)**

(54) **Verfahren zum Messen des Massedurchflusses eines gas- oder dampfförmigen Fluids**

(57) Das Verfahren soll vergleichbar genaue Ergebnisse wie bei der Messung von Flüssigkeiten liefern. Das Fluid strömt in mindestens einem Meßrohr (4) eines Massedurchflußaufnehmers (1) eines Coriolis-Massedurchflußmessers, das mit einer von der Dichte des Fluids variierten Schwingfrequenz f schwingt, die praktisch gleich der Resonanzfrequenz des Meßrohrs (4) ist. An diesem sind ein Schwingungserreger (16) sowie ein Schwingungssensor (17), der ein Sensorsignal ($x_{17}$) abgibt, und ein Schwingungssensor (18), der ein Sensorsignal ($x_{18}$) abgibt, letztere in Strömungsrichtung beabstandet voneinander angeordnet. Das Meßrohr (4) ist von einem Tragrahmen oder einem Trägerrohr (15) umgeben oder an einer Trägerplatte schwingfähig gehalten. Die Sensorsignale ($x_{17}$, $x_{18}$) haben eine Phasenverschiebung, aus der ein Signal gebildet wird. Dieses wird mit einer von der Schall-Geschwindigkeit des Fluids abhängigen Funktion multipliziert. Die Schall-Geschwindigkeit kann durch eine von der momentanen Temperatur des Meßrohrs (4) abhängige Funktion angenähert sein.

**Fig.1**

**Beschreibung**

Die Erfindung betrifft ein Verfahren zum Messen des Massedurchflusses eines gas- oder dampfförmigen Fluids nach dem Coriolis-Prinzip.

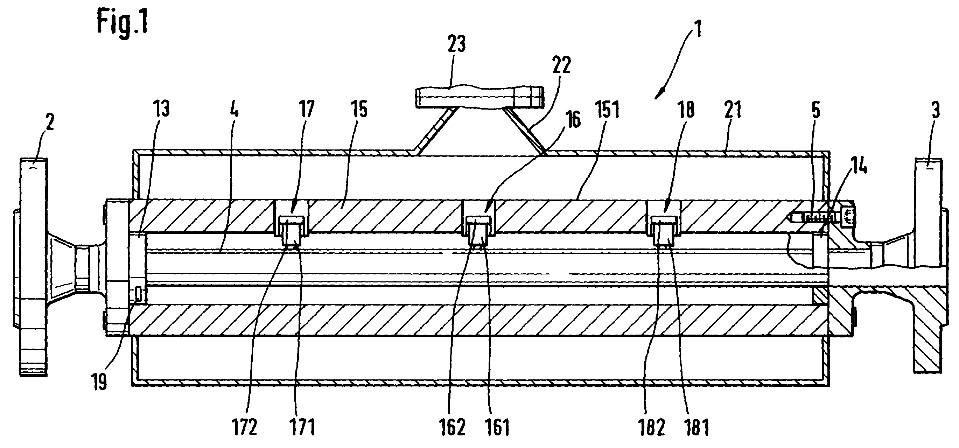

Hierzu dienen Coriolis-Massedurchfluß/Dichtemesser, die bekanntlich mindestens ein zu mechanischen Schwingungen erregtes, vom Fluid durchströmtes Meßrohr haben, das gebogen oder gerade sein kann; Einzelheiten hierzu sind unten in Zusammenhang mit der Erläuterung der Fig. 1 angegeben.

Üblicherweise sind mindestens ein Schwingungserreger sowie mindestens zwei Schwingungssensoren am Meßrohr, letztere in Strömungsrichtung beabstandet voneinander, angeordnet. Das Meßrohr schwingt meist mit einer von seinem Material und seinen Abmessungen vorgegebenen, jedoch von der Dichte des Fluids variierten mechanischen Resonanzfrequenz. In anderen Fällen liegt die Schwingfrequenz des Meßrohrs nicht genau bei dessen mechanischer Resonanzfrequenz, sondern in deren Nachbarschaft.

Die Schwingungssensoren geben analoge Sensorsignale ab, deren Frequenz gleich der Schwingfrequenz des Meßrohrs ist und die zeitlich gegeneinander versetzt sind, also eine gegenseitige Phasenverschiebung aufweisen, wenn das Fluid im Meßrohr strömt. Daraus läßt sich ein Zeitdifferenz-Signal, z.B. zwischen Nulldurchgängen der Sensorsignale, ableiten, das direkt proportional zum Massedurchfluß ist, wie das z.B. in der US-A 41 87 721 beschrieben ist.

Aus der Phasenverschiebung läßt sich aber auch eine Winkeldifferenz bilden, die nach Division durch das $2\pi$-Fache der Resonanzfrequenz f des Meßrohrs direkt proportional zum Massedurchfluß ist, wie das in der US-A 56 48 616 oder in der EP-A 866 319 beschrieben ist.

Die erwähnten Proportionalitäten können bei der Messung des Massedurchflusses von Flüssigkeiten immer exakt vorausgesetzt werden, so daß bei heutigen Coriolis-Massedurchfluß/Dichtemessern eine Meßgenauigkeit von 0,1% garantiert werden kann.

Wie die Erfinder festgestellt haben, kann bei der Messung von gas- oder dampfförmigen Fluiden die erwähnte exakte Proportionalität meist nicht vorausgesetzt werden, woraus eine geringere Genauigkeit resultiert.

Eine Aufgabe der Erfindung besteht daher darin, ein Verfahren zum Messen des Massedurchflusses eines gas- oder dampfförmigen Fluids nach dem Coriolis-Prinzip anzugeben, das vergleichbar genaue Ergebnissse wie bei der Messung von Flüssigkeiten liefert.

Zur Lösung der Aufgabe besteht die Erfindung daher in einem Verfahren zum Messen des Massedurchflusses eines gas- oder dampfförmigen Fluids, das in mindestens einem Meßrohr eines Massedurchflußaufnehmers eines Coriolis-Massedurchfluß/Dichtemessers strömt,

- das im Betrieb mit einer von seinem Material und seinen Abmessungen vorgegebenen, jedoch von der Dichte des Fluids variierten Schwingfrequenz schwingt, die gleich der momentanen mechanischen Resonanzfrequenz des Meßrohrs oder dieser benachbart ist,
- an dem ein erster Schwingungssensor,

    -- der ein erstes Sensorsignal abgibt, und

- ein zweiter Schwingungssensor,

    -- der ein zweites Sensorsignal abgibt,

- in Strömungsrichtung beabstandet voneinander, sowie
- ein Schwingungserreger angeordnet sind und
- das von einem Tragrahmen oder einem Trägerrohr umgeben oder an einer Trägerplatte schwingfähig gehaltert ist,

bei welchem Verfahren aus dem ersten und dem zweiten Sensorsignal ein von einer Phasenverschiebung der Sensorsignale abhängiges Signal gebildet und dieses mit einer von der Schall-Geschwindigkeit c des Fluids abhängigen Funktion f(c) multipliziert wird.

Nach einer ersten bevorzugten Ausgestaltung der Erfindung ist das von der Phasenverschiebung abhängige Signal ein Zeitdifferenz-Signal zwischen Nulldurchgängen der Sensorsignale.

Nach einer zweiten bevorzugten Ausgestaltung der Erfindung ist das von der Phasenverschiebung abhängige Signal eine Winkeldifferenz und diese wird durch das $2\pi$-Fache der Schwingfrequenz f dividiert.

Nach einer dritten bevorzugten Ausgestaltung der Erfindung, die auch bei der ersten oder der zweiten Ausgestaltung anwendbar ist, hat die Funktion f(c) die Form

$$f(c) = \{1 + b \cdot (2\pi \cdot f \cdot d/c)^2\}^{-1},$$

worin

b      eine durch Kalibrieren ermittelte, für alle Nennweiten des Meßrohrs gleiche Konstante und

d      dessen Innen-Durchmesser sind.

In weiterer bevorzugter Ausgestaltung der Erfindung wird die Schall-Geschwindigkeit c durch eine von der momentanen Temperatur $T_m$ des Meßrohrs abhängige Funktion $f(T_m)$ angenähert, die insb. die Form hat: $c = c_0 + c_1 \cdot T_m$, worin $c_0$, $c_1$ fluid-spezifische Konstanten sind.

Ein Vorteil der Erfindung besteht darin, daß die Schall-Geschwindigkeit des Fluids und damit indirekt dessen Kompressibilität bei der Messung mitberücksichtigt werden und somit die Genauigkeit der Massedurchflußmessung von gas- oder dampfförmigen Fluiden praktisch identisch wie die Genauigkeit der Messung von Flüssigkeiten gemacht werden kann.

Die Erfindung und weitere Vorteile werden nun anhand Ausführungsbeispielen näher erläutert, die in den Figuren der Zeichnung dargestellt sind.

Fig. 1     zeigt eine vertikale, teilweise geschnittene Längsansicht eines Massedurchflußaufnehmers eines Massedurchflußmessers mit einem Meßrohr, und

Fig. 2     zeigt nach Art eines Blockschaltbilds eine Meßschaltung zur Durchführung des Verfahrens der Erfindung z.B. für den Massedurchflußmesser von Fig. 1.

In Fig. 1 ist in vertikaler, teilweise geschnittener Längsansicht ein Massedurchflußaufnehmer 1 eines für das Verfahren der Erfindung geeigneten Coriolis-Massedurchfluß/Dichtemessers gezeigt, der in den Verlauf einer von einem zu messenden, gas- oder dampfförmigen Fluid durchströmten - aus Gründen der Übersichtlichkeit jedoch nicht dargestellten - Rohrleitung eines gegebenen Durchmessers, z.B. über Flansche 2, 3, einzusetzen ist. Anstatt mittels Flanschen kann der Massedurchflußaufnehmer 1 an die erwähnte Rohrleitung auch durch anderer bekannte Mittel angeschlossen werden, wie z.B. mittels Triclamp-Anschlüssen oder Schraubverbindungen.

Der Massedurchflußaufnehmer 1 von Fig. 1 hat ein einziges gerades Meßrohr 4, dessen fluid-einlaß-seitiges Ende am Flansch 2, z.B. über eine fluid-einlaß-seitige Endplatte 13, und dessen fluid-auslaß-seitiges Ende am Flansch 3, z.B. über eine fluid-auslaß-seitige Endplatte 14, fixiert ist. In die Endplatten 13, 14 ist das Meßrohr 4 dicht, insb. vakuum-dicht, eingepaßt, z.B. eingeschweißt, eingelötet oder eingewalzt, vgl. dazu die US-A 56 10 342.

Das Verfahren der Erfindung kann auch bei einem Clamp-On-Coriolis-Massedurchflußaufnehmer nach der älteren Anmeldung PCT/EP99/02134 oder bei einem Massedurchflußaufnehmer mit einem einzigen Meßrohr, das eine Auslegermasse aufweist, nach der EP-A 849 568 eingesetzt werden. Anstatt eines einzigen geraden Meßrohrs kann der Massedurchflußaufnehmer des Coriolis-Massedurchfluß/ Dichtemessers auch ein einziges, in einer Ebene gebogenes Meßrohr, z.B. ein kreissektor-förmiges Meßrohr, aufweisen, wie es z.B. in der US-A 57 05 754 beschrieben ist.

Es sind aber auch mehrere, insb. zwei, gerade Meßrohre, wie in der US-A 47 93 191 beschrieben, oder mehrere, insb. zwei, gebogene Meßrohre, wie in der US-A 41 27 028 beschrieben, möglich.

Ferner kann das Verfahren der Erfindung auch bei einem Massedurchflußaufnehmer mit einem Meßrohr und einem Blindrohr verwendet werden, wie er in der US-A 55 31 126 beschrieben ist. Schließlich ist das Verfahren der Erfindung auch bei Massedurchfluß/Dichtemessern anwendbar, deren Massedurchflußaufnehmer mindestens ein schraubenförmiges Meßrohr entsprechend der US-A 55 57 973 oder der US-A 56 75 093 aufweisen.

In Fig. 1 sind die Flansche 2, 3 und die Endplatten 13, 14 an oder in einem Trägerrohr 15 befestigt, und zwar durch Schrauben, von denen eine Schraube 5 rechts oben im Schnitt vollständig zu sehen ist. Die Endplatten 13, 14 können mit der Innenwand des Trägerrohrs 15 dicht, insb. vakuum-dicht, verschweißt oder verlötet sein. Es ist jedoch auch möglich, Trägerrohr 15 und Endplatten 13, 14 einstückig auszubilden. Anstatt des Trägerrohrs 15 kann auch ein Tragrahmen oder eine Trägerplatte verwendet werden.

Als Mittel, die das Meßrohr 4 zu Schwingungen, insb. zu Resonanz-Schwingungen, bevorzugt zu Resonanz-Biegeschwingungen, anregen, dient ein in der Mitte zwischen den Flanschen 2, 3 und den Endplatten 13, 14 sowie im Zwischenraum zwischen dem Trägerrohr 15 und dem Meßrohr 4 angeordneter, z.B. elektromagnetischer, Schwingungserreger 16, der einen am Meßrohr 4 befestigten Dauermagneten 161 und eine am Trägerrohr 15 befestigte Spule 162 umfaßt, in die der Dauermagnet 161 eintaucht und in der dieser hin- und herbewegbar ist.

In Fig. 1 erregt der Schwingungserreger 16 das Meßrohr 4 zu Biegeschwingungen in der Zeichenebene, und in dieser Ebene treten daher auch bei strömendem Fluid Corioliskräfte auf, die eine Phasenverschiebung zwischen einlaß-seitigen und auslaß-seitigen Abschnitten des Meßrohrs 4 bewirken.

Ferner sind im Zwischenraum zwischen dem Meßrohr 4 und dem Trägerrohr 15 ein erster und ein zweiter Schwingungssensor 17, 18 für die Schwingungen des Meßrohrs 4 angeordnet. Der Schwingungssensor 17 bzw. 18 befindet sich zwischen der Endplatte 13 bzw. 14 und dem Schwingungserreger 16, bevorzugt im gleichen Abstand von diesem, also auch von der Mitte des Meßrohrs 4.

Die Schwingungssensoren 17, 18 sind in Fig. 1 elektromagnetische Schwingungssensoren, die einen am Meßrohr 4 befestigten Dauermagneten 171 bzw. 181 und eine am Trägerrohr 15 befestigte Spule 172 bzw. 182 umfassen, in die der Dauermagnet 171 bzw. 181 eintaucht und in der dieser hin- und herbewegbar ist. Am Schwingungssensor 17 bzw. 18 entsteht ein erstes bzw. zweites Sensorsignal $x_{17}$ bzw. $x_{18}$.

An der Endplatte 13 ist ein Temperaturfühler 19 befestigt, der ein die momentane Temperatur des Meßrohrs 4 repräsentierendes Temperatur-Signal $x_{19}$ abgibt. Als Temperaturfühler wird bevorzugt ein Platinwiderstand benutzt, der, z.B. durch Kleben, an der Endplatte 13 befestigt ist.

In Fig. 1 ist schließlich noch ein am Trägerrohr 15 fixiertes Gehäuse 21 gezeigt, das u.a. dem Schutz von Leitungen dient, die an den Schwingungserreger 16 und an die Schwingungssensoren 17, 18 angeschlossen, jedoch au Gründen der Übersichtlichkeit nicht dargestellt sind.

Das Gehäuse 21 ist mit einem hals-artigen Übergangsstück 22 versehen, an dem ein nur teilweise gezeichnetes Elektronik-Gehäuse 23 zur Aufnahme einer Meß- und Betriebsschaltung des Massedurchfluß/Dichtemessers fixiert ist.

Für den Fall, daß das Übergangsstück 22 und das Elektronik-Gehäuse 23 das Schwingungsverhalten des Trägerrohrs 15 ungünstig beeinflussen sollten, können diese auch getrennt vom Massedurchflußaufnehmer 1 angeordnet werden. Dann besteht lediglich eine Kabelverbindung zwischen der Elektronik und dem Massedurchflußaufnehmer 1.

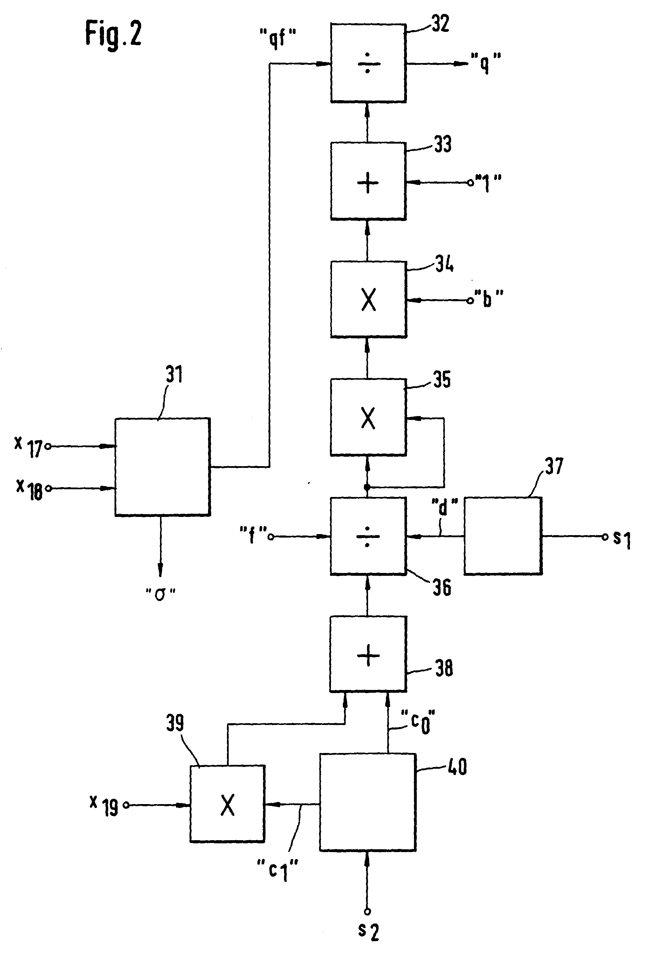

Die Fig. 2 zeigt nach Art eines Blockschaltbilds eine Meßschaltung zur Durchführung des Verfahrens der Erfindung für Massedurchfluß/Dichtemesser mit den oben erwähnten verschiedenen Ausgestaltungen von Meßrohren. Die Meßschaltung umfaßt eine übliche Teilschaltung 31, die aus den erwähnten Sensorsignalen $x_{18}$, $x_{19}$ ein Massedurchfluß-Signal "$q_f$" und ein Dichte-Signal "$\sigma$" erzeugt. Als Teilschaltung 31 kann jede geeignete und vorbeschriebene Schaltung verwendet werden, insb. die bereits eingangs erwähnten Schaltungen nach der US-A 41 87 721 oder der US-A 56 48 616.

Wenn Flüssigkeiten im Meßrohr 4 strömen, repräsentiert das Massedurchfluß-Signal "$q_f$" üblicherweise bereits den Massedurchfluß q' der Flüssigkeit, also das Meßergebnis. Dies läßt sich physikalisch darauf zurückführen, daß bei Flüssigkeits-Messungen praktisch immer die Bedingung erfüllt ist:

$$(2\pi \cdot f \cdot d)/c \ll 1, \tag{1}$$

worin

c   die Schall-Geschwindigkeit des Fluids, hier also der Flüssigkeit,
d   die Wandstärke des Meßrohrs 4 und
f   dessen momentane Schwingfrequenz ist.

Somit gilt für Flüssigkeiten:

$$q_f = C \cdot \delta\tau = (C \cdot \delta\phi)/(2\pi f), \tag{2}$$

worin

C   eine durch Kalibrieren zu ermittelnde Konstante, der sogenannte Kalibrierfaktor,
$\delta\tau$   die eingangs erwähnte Zeitdifferenz, z.B. zwischen Nulldurchgängen der Sensorsignale $x_{17}$, $x_{18}$ und
$\delta\phi$   die eingangs erwähnte Winkeldifferenz ist.

Demgegenüber wird entsprechend dem Verfahren der Erfindung bei der Schaltungsanordnung von Fig. 2 der Massedurchfluß $q_f$ sozusagen noch korrigiert, bevor ein (endgültiges) Massedurchfluß-Signal "q" erzeugt wird, das den Massedurchfluß q des gas- oder dampfförmigen Fluids repräsentiert.

Das Signal $q_f$ wird mit einer von der Schall-Geschwindigkeit c des Fluids abhängigen Funktion f(c) multipliziert. Diese hat z.B. die Form:

$$f(c) = \{1 + b \cdot (2\pi \cdot f \cdot d/c)^2\}^{-1}, \tag{3}$$

worin

b   eine durch für alle Nennweiten des Meßrohrs (4) gleiche, durch Kalibrieren ermittelte Konstante und
d   dessen Innen-Durchmesser sind.

Im Ausführungsbeispiel von Fig. 2 gehorcht der Massedurchfluß q der folgenden Gleichung:

$$q = \frac{C \cdot \delta\tau}{1 + \dfrac{b \cdot (2\pi \cdot f \cdot d)^2}{(c_0 + c_1 \cdot x_{19})^2}} = \frac{(C \cdot \delta\phi)/(2\pi f)}{1 + \dfrac{b \cdot (2\pi \cdot f \cdot d)^2}{(c_0 + c_1 \cdot x_{19})^2}} \qquad (4)$$

In Gleichung (4) ist sind $c_0$, $c_1$ gas- oder dampfspezifische Konstanten und haben für die in der folgenden Tabelle genannten Gase die angegebenen Werte. Dabei ist vorausgesetzt, daß das Temperatur-Signal $x_{19}$ Temperaturen proportional ist, die in Grad Celsius gemessen sind.

| Gas | $c_0$ <br> m/s | $c_1$ <br> m/(s·°C) |
|---|---|---|
| molekularer Sauerstoff | 313,32 | 0,748 |
| molekularer Stickstoff | 336,69 | 0,6097 |
| molekularer Wasserstoff | 1286,6 | 2,132 |
| Luft | 336,69 | 0,6097 |
| Kohlendioxid | 225,06 | 0,6983 |
| Methan | 415,72 | 0,8688 |
| Ammoniak | 415,97 | 0,7037 |
| Ethylen bei 7,5 MPa | 552,23 | −8,9039 |
| Ethylen bei 9,5 MPa | 617,01 | −7,932 |
| Argon | 311,25 | 0,594 |
| Helium | 972,49 | 1,7011 |

Das aus der Teilschaltung 31 stammende Massedurchfluß-Signal "$q_f$" ist einem Dividend-Eingang eines ersten Dividierers 32 zugeführt. An einem Ausgang von ihm entsteht das Massedurchfluß-Signal "q". An einem Divisor-Eingang des Dividierers 32 liegt ein Ausgang eines ersten Addierers 33. Einem ersten Eingang von ihm ist ein die Zahl 1 repräsentierendes Signal "1" zugeführt.

An einem zweiten Eingang des Addierers 33 liegt ein Ausgang eines ersten Multiplizierers 34. An einem ersten Eingang von ihm liegt ein die oben erwähnte Konstante b repräsentierendes Signal "b". Da diese Konstante während des Kalibrierens ermittelt wird, wird das Signal "b", wie es für Kalibrierwerte üblich ist, wie diese in einem elektronischen Speicher, z.B. einem EEPROM, abgelegt. Von diesem aus liegt das Signal "b" dann am erwähnten Eingang des Multiplizierers 34.

An einem zweiten Eingang des Multiplizierers 34 liegt der Ausgang eines zweiten Multiplizierers 35, von dem ein erster und ein zweiter Eingang mit demselben Signal gespeist sind, d.h. sie sind mit einem Ausgang eines zweiten Dividierers 36 verbunden. Der Multiplizierer 35 wirkt somit als Quadrierer für das Ausgangssignal des Dividierers 36. Dieser hat einen ersten Dividend-Eingang, dem ein die momentane Schwingfrequenz f des Meßrohrs 4 repräsentierendes Signal "f" zugeführt ist. Dieses Signal kann aus einem der Sensorsignale $x_{17}$, $x_{18}$ in üblicher Weise gebildet werden, vgl. z.B. die erwähnte US-A 56 48 616.

Der Dividierer 36 hat ferner einen zweiten Dividend-Eingang, dem ein die Wandstärke d des Meßrohrs 4 repräsentierendes Signal "d" zugeführt ist. Dieses Signal stammt aus einem ersten elektronischen Speicher 37, z.B. einem EEPROM, in dem alle in der Praxis vorkommenden Werte der Wandstärke d abgelegt sind. Die Wandstärke d variiert nämlich mit dem Durchmesser des Meßrohrs 4 und dieser mit der Nennweite der erwähnten Rohrleitung, in die der Massedurchflußaufnehmer eingesetzt ist. Einem Select-Eingang des Speichers 37 ist ein erstes Select-Signal $s_1$ dauernd zugeführt, mit dem der Hersteller des Coriolis-Massedurchfluß/Dichtemessers für jedes Exemplar den zutreffenden Wert der Wandstärke d vorgibt.

Der Dividierer 36 hat schließlich einen Divisor-Eingang, der am Ausgang eines zweiten Addierers 38 liegt. Ein erster Eingang von ihm ist mit einem Ausgang eines dritten Multiplizierers 39 verbunden, von dem ein erster Eingang mit dem oben erwähnten Temperatur-Signal $x_{19}$ gespeist ist und von dem ein zweiter Eingang an einem ersten Ausgang eines zweiten elektronischen Speichers 40 angeschlossen ist. Dieser kann z.B. wieder ein EEPROM sein.

Im Speicher 40 sind Signale "$c_0$", "$c_1$" gespeichert, die die in der obigen Tabelle angegeben Werte der Konstanten $c_0$, $c_1$ repräsentieren. An ersten Ausgang des Speichers 40 liegt das Signal "$c_1$" und an einem zweiten Ausgang das Signal "$c_0$". Dieser Ausgang ist mit einem zweiten Eingang des Addierers 38 verbunden. Der Speicher 40 hat ferner einen Select-Eingang, dem ein zweites Select-Signal $s_2$ zugeführt ist, mit dem der Benutzer des Coriolis-Massedurchfluß/Dichtemessers das Auslesen der zum gerade zu messenden Fluid gehörenden Signale "$c_0$", "$c_1$" einstellt.

Wenn die den Teilschaltungen 32 bis 40 von Fig. 2 zugeführten Signale Digitalsignale sind, lassen sich deren Funktionen mittels eines entsprechend programmierten Mikroprozessors realisieren. Zwischen dem Ausgang der Teilschaltung 31 und dem Eingang des Dividierers 32 ist ein Analog/Digital-Wandler vorzusehen, wenn die Teilschaltung 31 ein Analog-Signal abgibt, wie z.B. die eine der in der erwähnten US-A 56 48 616 beschriebenen Schaltungen.

Wenn dagegen die Telischaltung 31 ein Digital-Signal erzeugt, wie z.B. die andere der in der US-A 56 48 616 beschriebenen Schaltungen oder die Schaltungen der erwähnten EP-A 866 319, ist kein Analog/Digital-Wandler erforderlich.

In Fig. 2 wird die Schall-Geschwindigkeit c dadurch berücksichtigt, daß für deren Temperatur-Abhängigkeit der Term $c_0 + c_1 \cdot x_{19}$ benutzt wird. Es sind jedoch auch andere Terme für die Temperatur-Abhängigkeit möglich, wie z.B. die der folgenden Gleichungen (4) und (5):

$$c = z_0 + z_1 \cdot T_m + z_2 \cdot p + z_3 T_m, \qquad (5)$$

worin

$z_0$, $z_1$, $z_2$, $z_3$       zu messende fluid-spezifische Konstanten und

p                der Fluid-Druck sind, der mittels eines Drucksensors gemessen wird, oder

$$c = k_0 \cdot (T_m)^{1/2}, \qquad (6)$$

worin $k_0$ wieder eine zu messende fluid-spezifische Konstante ist.

Wenn eine der Gleichungen (5), (6) für die Berücksichtigung der Schall-Geschwindigkeit c verwendet werden soll, ist die jeweilige rechte Seite der Gleichungen (5), (6) in Gleichung (4) anstatt des Nenner-Terms $c_0 + c_1 \cdot x_{19}$ einzusetzen, wobei für $T_m$ wieder das Temperatur-Signal $x_{19}$ zu wählen ist.

**Patentansprüche**

1. Verfahren zum Messen des Massedurchflusses eines gas- oder dampfförmigen Fluids, das in mindestens einem Meßrohr (4) eines Massedurchflußaufnehmers (1) eines Coriolis-Massedurchfluß/Dichtemessers strömt,

- das im Betrieb mit einer von seinem Material und seinen Abmessungen vorgegebenen, jedoch von der Dichte des Fluids variierten Schwingfrequenz f schwingt, die gleich der momentanen mechanischen Resonanzfrequenz des Meßrohrs oder dieser benachbart ist,
- an dem ein erster Schwingungssensor (17),

       -- der ein erstes Sensorsignal ($x_{17}$) abgibt, und

- ein zweiter Schwingungssensor (18),

  -- der ein zweites Sensorsignal ($x_{18}$) abgibt,

- in Strömungsrichtung beabstandet voneinander, sowie
- ein Schwingungserreger (16) angeordnet sind und
- das von einem Tragrahmen oder einem Trägerrohr (15) umgeben oder an einer Trägerplatte schwingfähig gehaltert ist,

bei welchem Verfahren aus dem ersten und dem zweiten Sensorsignal ($x_{17}$, $x_{18}$) ein von einer Phasenverschiebung der Sensorsignale abhängiges Signal $q_f$ gebildet und dieses mit einer von der Schall-Geschwindigkeit c des Fluids abhängigen Funktion f(c) multipliziert wird.

2. Verfahren nach Anspruch 1, bei dem das von der Phasenverschiebung abhängige Signal ein Zeitdifferenz-Signal $\delta\tau$ zwischen Nulldurchgängen der Sensorsignale ist.

3. Verfahren nach Anspruch 1, bei dem das von der Phasenverschiebung abhängige Signal eine Winkeldifferenz $\delta\phi$ ist und diese durch das $2\pi$-Fache der Schwingfrequenz f dividiert wird.

4. Verfahren nach einem der Ansprüche 1 bis 3, bei dem die Funktion f(c) die Form hat:

$$f(c) = \{1 + b \bullet (2\pi \bullet f \bullet d/c)^2\}^{-1},$$

worin

b    eine durch Kalibrieren ermittelte, für alle Nennweiten des Meßrohrs (4) gleiche Konstante und
d    dessen Innen-Durchmesser sind.

5. Verfahren nach Anspruch 3, bei dem die Schall-Geschwindigkeit c durch eine von der momentanen Temperatur $T_m$ des Meßrohrs (4) abhängige Funktion $f(T_m)$ angenähert wird.

6. Verfahren nach Anspruch 5, bei dem die Funktion $f(T_m)$ die Form hat: $c = c_0 + C_1 \bullet T_m$, worin $c_0$, $c_1$ fluidspezifische Konstanten sind.

Fig.1

# Fig.2

Europäisches
Patentamt

**EUROPÄISCHER RECHERCHENBERICHT**

Nummer der Anmeldung

EP 00 10 9671

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | EP 0 415 129 A (CHI HUNG NGUYEN DR) 6. März 1991 (1991-03-06) * Spalte 1, Zeile 15 - Zeile 26 * --- | 1 | G01F1/84 |
| A | US 5 347 874 A (KALOTAY PAUL Z ET AL) 20. September 1994 (1994-09-20) * Spalte 2, Zeile 10 - Zeile 19 * --- | 1 | |
| A | US 5 736 653 A (DRAHM WOLFGANG ET AL) 7. April 1998 (1998-04-07) * das ganze Dokument * ----- | 1 | |
| | | | **RECHERCHIERTE SACHGEBIETE (Int.Cl.7)** G01F |

Der vorliegende Recherchenbericht wurde für alle Patentansprüche erstellt

| Recherchenort | Abschlußdatum der Recherche | Prüfer |
|---|---|---|
| DEN HAAG | 22. August 2000 | Boerrigter, H |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
    Dokument

EPO FORM 1503 03.82 (P04C03)

EP 1 054 240 A1

## ANHANG ZUM EUROPÄISCHEN RECHERCHENBERICHT
## ÜBER DIE EUROPÄISCHE PATENTANMELDUNG NR.

EP 00 10 9671

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-08-2000

| Im Recherchenbericht angeführtes Patentdokument | Datum der Veröffentlichung | Mitglied(er) der Patentfamilie | Datum der Veröffentlichung |
|---|---|---|---|
| EP 0415129 A | 06-03-1991 | DE 3928839 A | 07-03-1991 |
| | | DE 59010704 D | 28-05-1997 |
| | | DK 415129 T | 20-10-1997 |
| | | JP 2917051 B | 12-07-1999 |
| | | JP 3096818 A | 22-04-1991 |
| US 5347874 A | 20-09-1994 | AT 168771 T | 15-08-1998 |
| | | AU 6031494 A | 15-08-1994 |
| | | CA 2154672 A | 04-08-1994 |
| | | CN 1118624 A,B | 13-03-1996 |
| | | DE 69411886 D | 27-08-1998 |
| | | DE 69411886 T | 10-12-1998 |
| | | EP 0680602 A | 08-11-1995 |
| | | JP 2871096 B | 17-03-1999 |
| | | JP 8505698 T | 18-06-1996 |
| | | WO 9417375 A | 04-08-1994 |
| US 5736653 A | 07-04-1998 | EP 0754934 A | 22-01-1997 |
| | | JP 2866060 B | 08-03-1999 |
| | | JP 9033309 A | 07-02-1997 |

EPO FORM P0461

Für nähere Einzelheiten zu diesem Anhang : siehe Amtsblatt des Europäischen Patentamts, Nr.12/82

11